# DEMANDE DE BREVET EUROPEEN

(11) **EP 4 116 672 A1**
(43) Date de publication de la demande: **11.01.2023**
(21) Numéro de dépôt: 22179895.2
(22) Date de dépôt: 20.06.2022
(51) Int. Cl.: G01C 3/08, G01B 11/00, G01C 15/00, G01S 7/48, G01S 17/08, G01C 5/00

(54) **DISPOSITIF DE MESURE POUR LA MISE EN OEUVRE DE PLAQUE DE PLÂTRE**

(30) Priorité: 07.07.2021 FR 2107346; 29.10.2021 FR 2111584; 03.03.2022 FR 2201838
(71) Demandeur: Illinois Tool Works, Inc., Glenview, Illinois 60025 (US)
(72) Inventeur: SIMONIN, Jean-Luc, Glenview, 60025 (US); TOURNIER, Ludovic, Glenview, 60025 (US)
(74) Mandataire: HGF

(57) **Abrégé**

L'invention concerne un dispositif de détermination d'une distance (AB) entre un premier point (A) et un second point (B). Plus précisément, ce dispositif comprend un boîtier (1) muni d'un premier moyen de pointage (11 ; 13) du premier point (A) et un second moyen de pointage (12 ; 14) du second point (B), les premier et second moyens de pointage étant agencés sensiblement en un point (C) au sein dudit boîtier ; un premier moyen de détermination d'une première distance (AC) entre le premier point (A) et le point (C) ; un second moyen de détermination d'une seconde distance (BC) entre le second point (B) et le point (C) ; un moyen d'ajustement (6) d'un angle (α) permettant d'ajuster l'angle formé entre les première et seconde distances afin de pointer en même temps les premier et second points au moyen respectivement des premier et second moyens de pointage ; un moyen de détermination (15) dudit angle (α) ; le premier moyen de pointage (11 ; 13) du premier point (A) étant mobile par rapport au second moyen de pointage (12 ; 14) du second point (B) lors de l'ajustement de l'angle (a) par le moyen d'ajustement (6).

## Description

### Domaine technique de l'invention

La présente invention concerne un dispositif d'aide à la prise de mesures. Plus spécifiquement, bien que non exclusivement, cette invention concerne un dispositif de mesure pour la mise en oeuvre de plaques de plâtre communément appelées placoplâtres.

### Arrière-plan technique

De nos jours, l'isolation des murs pour les bâtiments (industriels, pavillonnaires ou immeubles) est réalisée au moyen de plaques de plâtres (aussi appelée BA13 ou placoplâtres). Ces plaques sont vissées sur des rails métalliques qui eux-mêmes sont vissés sur les murs ou au plafond au moyen de vis et chevilles. Pour réaliser l'isolation, un isolant de type laine de verre par exemple est posé de manière générale entre les rails métalliques, contre le mur ou plafond puis enfermé par les plaques de plâtres une fois que ces dernières sont vissées sur les rails.

Ces opérations sont longues, et fastidieuses. Plus particulièrement quand l'opérateur doit fixer le rail métallique au plafond. En effet, l'ensemble des gaines passant par le plafond via des trous aménagés, il est d'usage d'ajuster la longueur des rails, par exemple lorsque le rail se situe entre deux trous ou bien entre un trou et un début de cloison. Pour toutes ces opérations au plafond, l'opérateur doit monter sur un monte marche pour prendre la longueur de rail nécessaire, descendre du monte marche, reporter la longueur sur le rail pour le découper à la bonne longueur, remonter sur le monte marche pour fixer le rail avec une visseuse au moyen de vis et cheville au plafond.

Il existe également sur le marché des télémètres lasers mais avec uniquement un seul faisceau de pointage. Pour prendre une mesure entre deux points, ou plus généralement deux zones, l'opérateur pointe un premier point, valide le premier point, puis pointe le second point et le valide. Pour avoir la distance entre ces deux points, l'opérateur doit également prendre une mesure d'un troisième point situé à 90 degrés de l'axe reliant les deux points. Sans cette troisième mesure, l'opérateur est incapable de connaitre l'angle entre les deux distances reliant le dispositif de mesure et les deux points dont on doit mesurer la distance qui les séparent, et donc de la calculer. Tout ceci est fastidieux en termes de temps de mise en œuvre.

Il serait donc avantageux de fournir un outil à l'opérateur qui atténue les problèmes cités, et plus particulièrement de limiter le nombre d'opérations de l'opérateur afin de gagner du temps de mise en œuvre.

### Résumé de l'invention

La présente invention concerne un dispositif de détermination d'une distance AB entre un premier point A et un second point B.

Le dispositif peut comprendre un boîtier. Le boîtier peut être muni d'un premier moyen de pointage du premier point A. Le boîtier peut être muni d'un second moyen de pointage du second point B. Les premier et second moyens de pointage peuvent être agencés sensiblement en un point C au sein dudit boîtier.

Le dispositif peut comprendre un premier moyen de détermination d'une première distance AC entre le premier point A et le point C.

Le dispositif peut comprendre un second moyen de détermination d'une seconde distance BC entre le second point B et le point C.

Le dispositif peut comprendre un moyen d'ajustement d'un angle α. Le moyen d'ajustement d'un angle α peut permettre d'ajuster l'angle formé entre les première et seconde distances, par exemple afin de pointer en même temps les premier et second points au moyen respectivement des premier et second moyens de pointage.

Le dispositif peut comprendre un moyen de détermination dudit angle α.

Le premier moyen de pointage du premier point A peut être mobile par rapport au second moyen de pointage du second point B lors de l'ajustement de l'angle α par le moyen d'ajustement.

Plus particulièrement, la présente invention concerne un dispositif de détermination d'une distance AB entre un premier point A et un second point B. Avantageusement, ce dispositif comprend :
- un boîtier muni d'un premier moyen de pointage du premier point A et d'un second moyen de pointage du second point B, les premier et second moyens de pointage étant agencés sensiblement en un point C au sein dudit boîtier ;
- un premier moyen de détermination d'une première distance AC entre le premier point A et le point C ;
- un second moyen de détermination d'une seconde distance BC entre le second point B et le point C ;
- un moyen d'ajustement d'un angle α permettant d'ajuster l'angle formé entre les première et seconde distances afin de pointer en même temps les premier et second points au moyen respectivement des premier et second moyens de pointage ;
- un moyen de détermination dudit angle α ;
le premier moyen de pointage du premier point A étant mobile par rapport au second moyen de pointage du second point B lors de l'ajustement de l'angle α par le moyen d'ajustement.

Avantageusement, les premier et second moyens de pointage comprennent respectivement un premier et second dispositif de pointage de type laser.

Avantageusement, les moyens de détermination des première et seconde distances sont de type télémétrie laser.

Avantageusement, le moyen de détermination de l'angle α formé entre les premier et second moyens de pointage est un capteur d'angle.

Avantageusement, le moyen de détermination de l'angle formé entre les premier et second moyens de pointage est un capteur gyroscopique.

Avantageusement, le moyen d'ajustement est solidaire d'un corps du second moyen de pointage, une rotation dans un premier sens dudit moyen d'ajustement entrainant une rotation du second moyen de pointage dans le même sens ainsi qu'une rotation du premier moyen de pointage dans un second sens, opposé audit premier sens.

Avantageusement, chaque premier et second moyen de pointage comprend respectivement une première et une seconde roue crantée, chaque roue crantée disposant d'un pas identique entre elles et adaptées à se conformer entre elles, la rotation du premier moyen de pointage par ledit second moyen de pointage étant réalisé au moyen desdites première et seconde roues crantées lorsque le moyen d'ajustement est mis en rotation.

Avantageusement, le capteur d'angle est solidaire du second moyen de pointage et adapté à retourner une valeur d'angle de rotation dudit second moyen de pointage lorsque le moyen d'ajustement est mis en rotation.

Avantageusement, le second moyen de pointage est fixe par rapport au boitier. Avantageusement, le moyen d'ajustement est solidaire d'un corps du premier moyen de pointage, une rotation du moyen d'ajustement dans un sens entrainant une rotation du premier moyen de pointage dans le même sens.

Avantageusement, le moyen d'ajustement comprend un moyen d'indication d'une orientation du premier moyen de pointage, et le boîter comprend un moyen d'indication d'une orientation fixe du second moyen de pointage.

Avantageusement, le dispositif comprend au moins deux moyens de validation permettant d'enregistrer la distance AB dans un moyen d'enregistrement et/ou de l'afficher sur un afficheur.

L'invention concerne également un procédé pour déterminer une distance AB entre un premier point A et un second point B.

Le procédé peut comprendre fournir des premiers et deuxièmes moyens de pointage agencés tous deux sensiblement en un point C.

Le procédé peut comprendre pointer le premier moyen de pointage vers le premier point A.

Le procédé peut comprendre pointer le second moyen de pointage vers le second point B.

Le procédé peut comprendre ajuster un angle α formé entre les premiers et seconds moyens de pointage, par exemple afin de pointer en même temps les premiers et seconds moyens de pointage vers les premier et second points respectivement.

Le procédé peut comprendre déterminer une première distance AC entre le premier point A et le point C.

Le procédé peut comprendre déterminer une seconde distance BC entre le second point B et le point C.

Le procédé peut comprendre déterminer ledit angle α.

Le procédé peut comprendre calculer, par exemple à l'aide d'un algorithme trigonométrique, la distance AB entre le premier point A et le second point B en utilisant la première distance AC, la seconde distance BC et l'angle α.

Plus particulièrement, la présente invention concerne également un procédé pour déterminer une distance AB entre un premier point A et un second point B. Avantageusement, ce procédé comprend :
- fournir des premiers et deuxièmes moyens de pointage agencés tous deux sensiblement en un point C ;
- pointer le premier moyen de pointage vers le premier point A ;
- pointer le second moyen de pointage vers le second point B ;
- ajuster un angle α formé entre les premiers et seconds moyens de pointage afin de pointer en même temps les premiers et seconds moyens de pointage vers les premier et second points respectivement ;
- déterminer une première distance AC entre le premier point A et le point C ;
- déterminer une seconde distance BC entre le second point B et le point C ;
- déterminer ledit angle α ; et
- calculer à l'aide d'un algorithme trigonométrique la distance AB entre le premier point A et le second point B en utilisant la première distance AC, la seconde distance BC et l'angle α.

L'invention concerne également un programme informatique comprenant un code de programme lisible par ordinateur pour amener un processeur à exécuter une procédure pour mettre en œuvre le procédé ci-dessus.

Avantageusement, le procédé comprend enregistrer la distance (AB) dans un moyen d'enregistrement et/ou l'afficher sur un afficheur (5).

L'invention concerne également un dispositif tel que décrit ci-dessus comprenant un microprocesseur et un moyen d'enregistrement sur lequel est enregistré le programme informatique décrit ci-dessus.

### Brève description des figures

Des modes de réalisation de l'invention seront maintenant décrits à titre d'exemple uniquement en référence aux dessins ci-joints dans lesquels :
La figure 1 est une vue schématique d'un premier dispositif selon l'invention.
La figure 2 est une autre vue schématique du dispositif de la figure 1.
La figure 3 illustre l'opérateur lors de l'utilisation du dispositif selon l'invention.
La figure 4 illustre un mode de réalisation alternatif du dispositif de la figure 1.
Les figures 5 à 10 illustrent un second dispositif selon l'invention.
Les figures 11 à 16 illustrent un troisième dispositif selon l'invention.

### Description détaillée de l'invention

Pour éviter tout doute, toutes les caractéristiques décrites ici s'appliquent également à tout aspect de l'invention.

Dans le cadre de la présente demande, il est expressément prévu que les divers aspects, modes de réalisation, exemples et alternatives exposés dans les paragraphes précédents, dans les revendications et/ou dans la description et les dessins suivants, et en particulier les caractéristiques individuelles de ceux-ci, peuvent être pris indépendamment ou dans n'importe quelle combinaison. En d'autres termes, tous les modes de réalisation et/ou les caractéristiques de tout mode de réalisation peuvent être combinés de n'importe quelle manière, à moins que ces caractéristiques ne soient incompatibles.

Pour éviter toute ambiguïté, les termes "peut", "et/ou", "par exemple", "par exemple" et tout autre terme similaire utilisés dans le présent document doivent être interprétés comme non limitatifs, de sorte que toute caractéristique ainsi décrite ne doit pas nécessairement être présente. En effet, toute combinaison de caractéristiques optionnelles est expressément envisagée sans s'écarter de la portée de l'invention, que celles-ci soient ou non expressément revendiquées. Le demandeur se réserve le droit de modifier toute revendication déposée à l'origine ou de déposer toute nouvelle revendication en conséquence, y compris le droit de modifier toute revendication déposée à l'origine pour qu'elle dépende de et/ou incorpore toute caractéristique de toute autre revendication bien qu'elle ne soit pas revendiquée à l'origine de cette manière.

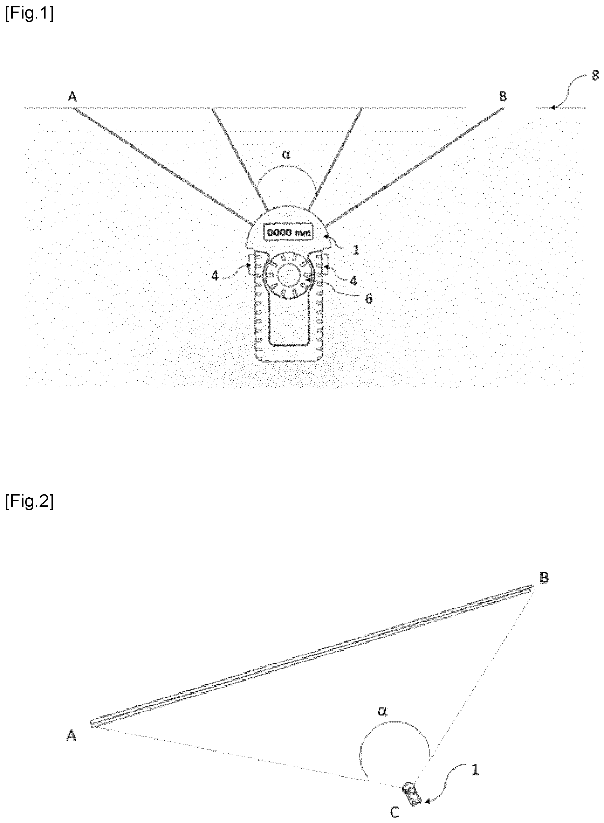

En se référant maintenant aux figures 1 à 3, le dispositif de détermination d'une distance AB entre un premier point A et un second point B est décrit plus en détail. On y distingue :
- un boîtier 1 muni d'un premier moyen de pointage 11 du premier point A et d'un second moyen de pointage 12 du second point B, les premier et second moyens de pointage étant agencés sensiblement en un point C au sein dudit boîtier.

Avantageusement, les moyens de pointage sont de type laser, et plus généralement un moyen, optique de visée.

Au sein de ce boîtier est également intégré un premier moyen de détermination d'une première distance AC entre le premier point A et le point C, ainsi qu'un second moyen de détermination d'une seconde distance BC entre second point B et le point C.

Avantageusement, ces moyens de détermination des première et seconde distances sont de type télémétrie laser.

On trouve également agencé sous forme de molette un moyen d'ajustement 6 d'un angle α formé entre les première et seconde distances afin de pointer en même temps les premier et second point au moyen respectivement des premier et second moyens de pointage.

Particulièrement, le moyen d'ajustement 6 permet d'ajuster l'angle α au 1/10ieme.

Le boitier comprend également un moyen de détermination de cet angle α de type capteur d'angle ou capteur gyroscopique, ce capteur étant lié mécaniquement au moyen d'ajustement 6 de l'angle.

Selon l'invention, le boitier comprend au moins deux moyens de pointage, le premier moyen de pointage 11 du premier point A étant mobile par rapport au second moyen de pointage 12 du second point B lors de l'ajustement de l'angle α au moyen de la molette.

Bien entendu, l'homme du métier peut envisager toute autre mise en œuvre pour la génération des premier et second moyens de pointage. Par exemple, bien que plus compliqué à mettre en oeuvre, on peut imaginer un premier moyen de pointage de type diode laser agencée sur un circuit imprimé dédié, et un système de miroirs permettant de générer le second moyen de pointage. Une fois l'ajustement réalisé avec les deux moyens de pointage pointant les premier et second point, un moyen de validation 4 permet de valider les deux pointages en même temps, et ensuite d'afficher la distance AB au moyen d'un afficheur 5. Ce calcul de distance AB est réalisé grâce aux valeurs a, AC et BC, au moyen d'un algorithme de trigonométrie classique mise en œuvre sein d'un microprocesseur.

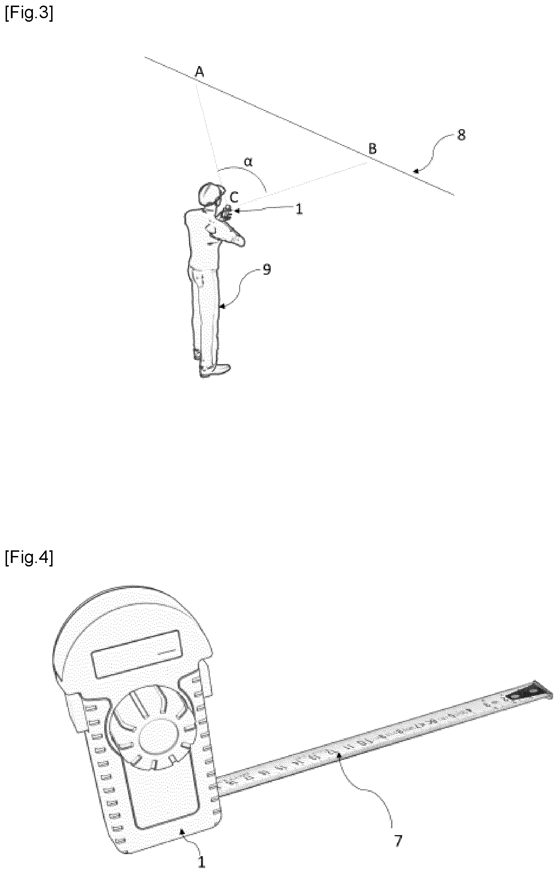

Sur la figure 3, il est illustré un opérateur 9 effectuant une mesure entre deux points A et B du plafond 8. On voit bien ici les avantages de l'invention, à savoir la rapidité de la prise de mesure grâce aux deux pointages effectués simultanément tout en ne nécessitant pas de monter sur un escabeau. Cela limite également les risques de chute de l'opérateur au cas où l'escabeau serait mal positionné ou bien encore que l'opérateur perde l'équilibre.

Optionnellement, en relation avec la figure 4, le dispositif peut intégrer des moyens de report 7 de la distance AB sur la pièce dont on doit réaliser la découpe (typiquement ici, un rail métallique). Par exemple, le moyen de report 7 est un mètre intégré au boitier 1.

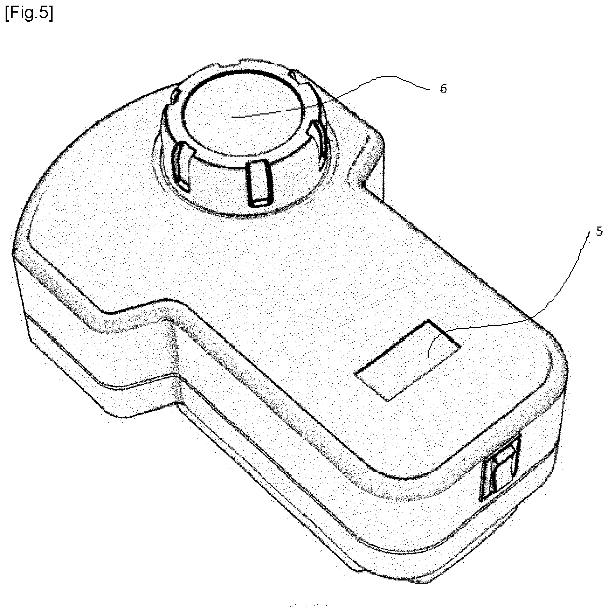

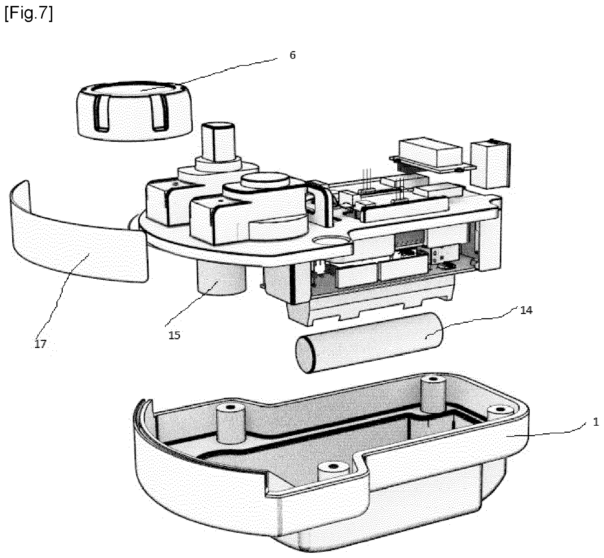

Les figures 5 à 10 illustrent un second mode de réalisation du dispositif de détermination dont la forme diffère mais dont le fonctionnement est identique à la variante décrite en relation avec les figures 1 à 4.

Dans cette variante, l'afficheur 5 est placé dans une zone inférieure du boîtier 1 et le moyen d'ajustement 6, par exemple de type molette, est placée au niveau d'une zone supérieure du boîtier.

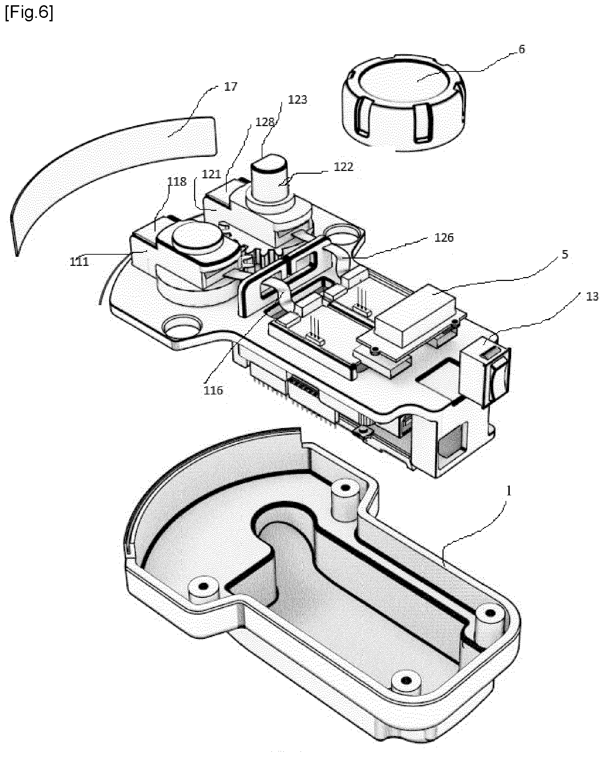

Les figures 6 à 10 illustrent plus précisément le boîtier de la figure 5 avec une vue en éclaté des différents éléments composants le boîtier 1, et plus particulièrement les premier et second moyens de pointage 11 et 12, le moyen d'ajustement de l'angle α entre les premier et second moyens de pointage et le moyen de détermination 16 dudit angle a.

La figure 6 décrit le moyen d'ajustement 6 de l'angle a.

Par exemple, mais non exclusivement, le moyen d'ajustement 6 consiste en une molette amovible venant se fixer sur un des moyens de pointage (ici le second moyen de pointage 12), encore appelé moyen de pointage maitre.

Ce moyen de pointage 12 maître est composé d'un corps 121 permettant d'accueillir un dispositif de pointage 128 de type laser, par exemple une diode laser.

Ce corps 121 comprends en outre un moyen de fixation 122 en forme de tige, le moyen de fixation 122 étant solidaire et sensiblement perpendiculaire au corps 121.

Avantageusement, le moyen de fixation comprend une partie de détrompage 123, par exemple un méplat, adapté à se conformer à un logement (non représenté) du moyen d'ajustement 6 lorsque ce dernier est positionné sur le moyen de fixation 122.

Bien entendu, l'homme du métier peut adapter tout autre variante possible afin d'assurer cette fonction de détrompage.

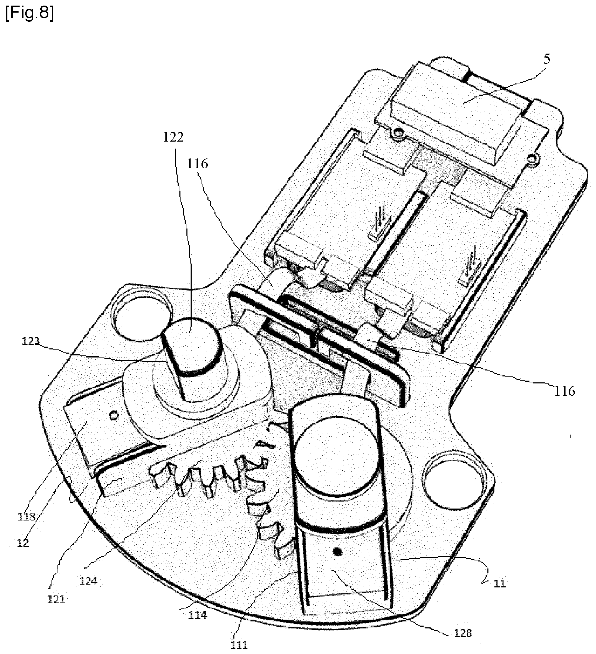

Comme illustré sur les figures 6 et 8, chaque premier et second moyen de pointage 11,12 comprend respectivement des crans 114,124 ménagés respectivement dans leur corps principal 111, 121. Les crans 114, 124 sont en contact entre eux de manière à ce que toute rotation dans un sens du second moyen de pointage 12 entraine en rotation le premier pointage 11 dans un sens inverse audit sens.

En d'autres termes, tout déplacement dans le sens horaire du moyen d'ajustement 6 induit un écartement identique dans le sens horaire et anti horaire respectivement pour les premier et second moyens de pointage 11, 12. Et inversement, si le moyen d'ajustement est tourné dans la sens anti-horaire.

Sur la figure 6, on distingue également un bouton de mise en marche 101 permettant la mise sous tension du dispositif, l'alimentation étant gérée par un module dédié (non décrit ici) relié à une batterie 14.

Également, on retrouve un afficheur 5 permettant de lire la valeur de la distance à déterminer sur un écran.

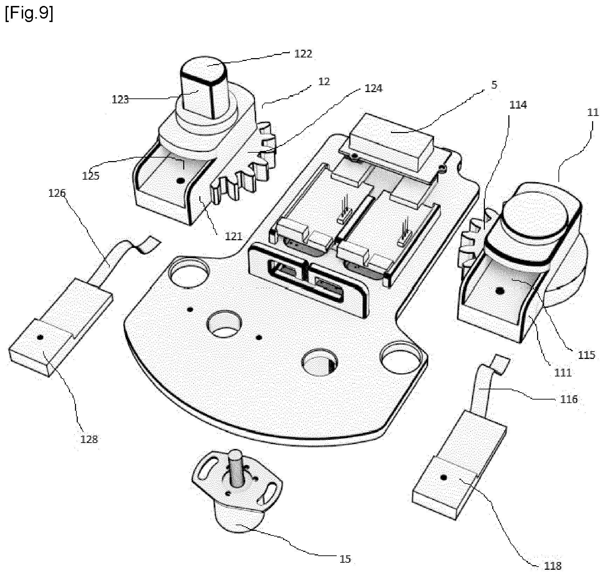

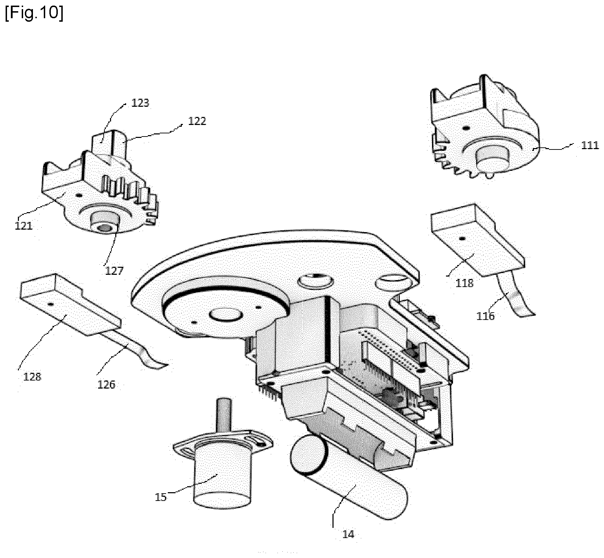

Les figures 9 et 10 illustrent plus précisément en éclaté les premier et second moyens de pointage (11, 12).

On y distingue notamment les corps 121 et 111, chaque corps comprenant un logement, respectivement un premier logement 125 et un logement 115 permettant d'insérer respectivement un premier et un second dispositif de pointage (118, 128) de type laser.

Chaque premier et second dispositif de pointage 118, 128 est relié à un circuit électronique de traitement de l'information (non détaillé ici) via des nappes électroniques, respectivement 126 et 116.

Sur la figure 9 on distingue également le capteur d'angle 15 relié mécaniquement, par exemple, par emmanchement à force dans un second logement 127 du second moyen de pointage 12, et coaxial à un axe passant par le milieu du moyen de fixation 122. Ainsi, le capteur d'angle 15 est également indirectement relié mécaniquement au moyen d'ajustement 6, permettant ainsi de remonter une information d'angle. Connaissant le pas des crans 124 ainsi que le déplacement en rotation du moyen d'ajustements 6, il est alors possible d'en déduire l'angle α.

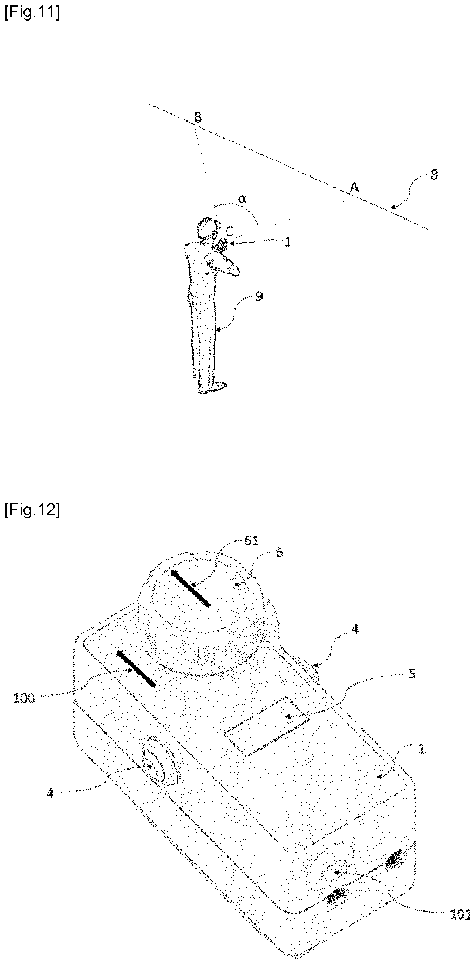

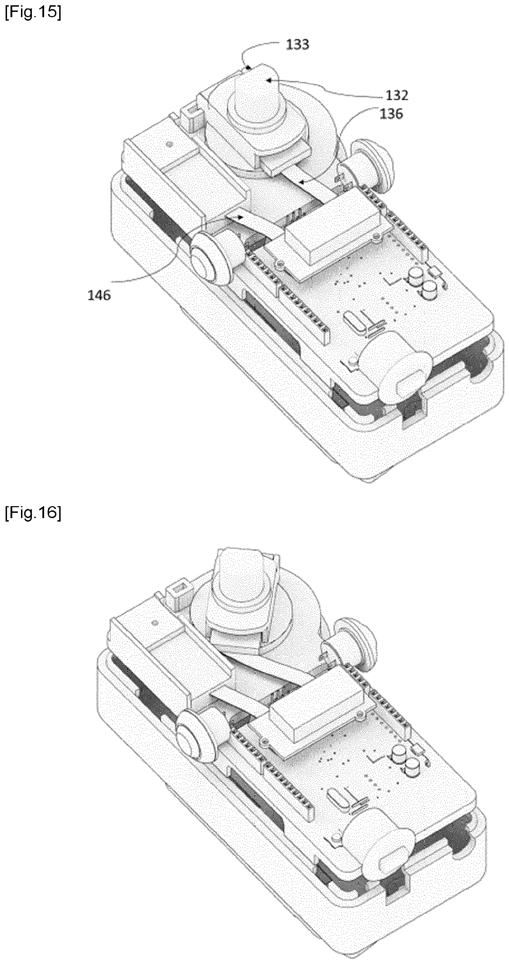

En se référant maintenant aux figures 11 à 16, le dispositif de détermination d'une distance AB entre un premier point A et un second point B est décrit plus en détail, selon un troisième mode de réalisation.

On y distingue un boîtier 1 muni d'un premier moyen de pointage 13 du premier point A et d'un second moyen de pointage 14 du second point B, les premier et second moyens de pointage étant agencés sensiblement en un point C au sein dudit boîtier.

Avantageusement, les premier et second moyens de pointage 13, 14 comprennent respectivement un premier et second dispositif de pointage 138, 148 de type laser, et plus généralement de type optique.

Au sein de ce boîtier est également intégré un premier moyen de détermination d'une première distance AC entre le premier point A et le point C, ainsi qu'un second moyen de détermination d'une seconde distance BC entre le second point B et le point C.

Avantageusement, ces moyens de détermination des première et seconde distances sont de type télémétrie laser.

On trouve également agencé sous forme de molette un moyen d'ajustement 6 d'un angle α formé entre les première et seconde distances afin de pointer en même temps les premier et second point au moyen respectivement des premier et second moyens de pointage 13, 14.

Particulièrement, le moyen d'ajustement 6 permet d'ajuster l'angle α au 1/10ieme d'angle.

Le boitier 1 comprend également un moyen de détermination de cet angle α de type capteur d'angle ou capteur gyroscopique, ce capteur étant lié mécaniquement au moyen d'ajustement 6 de l'angle.

Selon l'invention, le boitier comprend au moins deux moyens de pointage, le premier moyen de pointage 13 du premier point A étant mobile par rapport au second moyen de pointage 14 du second point B lors de l'ajustement de l'angle α au moyen de la molette.

Selon ce troisième mode de réalisation, le premier moyen de pointage 13 est mobile en rotation par rapport au boîtier 1 et le second moyen de pointage 14 est fixe par rapport au boitier 1. Le premier de pointage 13 est ainsi aussi mobile en rotation par rapport au second moyen de pointage 14. La rotation du premier moyen de pointage 13 est donc indépendante du second moyen de pointage 14.

En particulier, le premier moyen de pointage 13 est solidaire du moyen d'ajustement 6.

Ainsi, le second moyen de pointage 14 du second point B est fixe par rapport au premier moyen de pointage 13 du premier point A lors de l'ajustement de l'angle au moyen de la molette.

Dans un premier temps, pour réaliser la mesure de la distance AB, l'opérateur pointe le second point B avec le second moyen de pointage 14. Puis l'opérateur pointe le premier point A avec le premier moyen de pointage 13.

Pour pointer le premier point A, l'opérateur réalise une rotation du moyen d'ajustement 6 (de type molette par exemple). La rotation du moyen d'ajustement 6 entraîne alors la rotation, notamment dans le même sens, du premier moyen de pointage 13 pour venir pointer le premier point A.

Bien entendu, l'homme du métier peut envisager toute autre mise en œuvre pour la génération des premier et second moyens de pointage. Par exemple, bien que plus compliqué à mettre en œuvre, on peut imaginer un premier moyen de pointage de type diode laser agencée sur un circuit imprimé dédié, et un système de miroirs permettant de générer le second moyen de pointage.

Au moins un moyen de validation 4 (par exemple, un bouton) permet de valider les deux pointages. Bien entendu le bouton poussoir est relié à une carte électronique dédiée (non représentée) pour enregistrer et traiter chaque pointage effectué. Une fois les deux pointages effectués, une carte électronique dédiée (non représentée) effectue un calcul permettant de calculer la valeur de la distance AB à déterminer, et de l'afficher sur un afficheur 5.

Avantageusement, le boîtier 1 comprend deux moyens de validation 4 situés de part et d'autre du boitier. Ainsi, lorsque l'opérateur tient le boîtier en main, et en fonction de la situation, l'opérateur peut accéder facilement aux moyens de validation par simple pression avec un doigt de la main afin de valider le pointage en cours.

Une fois le second point B pointé par le second moyen de pointage 14, l'opérateur oriente le premier moyen de pointage 13 vers le premier point A pour le pointer. Cette orientation est effectuée par le moyen d'ajustement 6. Une rotation du moyen d'ajustement 6 permet donc de pointer le premier moyen de pointage en direction du premier point A, et donc d'ajuster l'angle α.

Un moyen d'indication 61, par exemple une flèche sérigraphiée sur le moyen d'ajustement 6, permet d'indiquer dans quelle direction pointe le premier moyen de pointage 13, ce dernier étant orienté dans la même direction que le moyen d'indication 61.

Avantageusement, le boîtier 1 comprend un moyen d'indication 100, par exemple en forme de flèche, orienté dans la même direction que le deuxième moyen de pointage 14. Le moyen d'indication 100 est par exemple sérigraphié sur le boîtier 1.

Une fois les pointages des premiers et second points validés par une pression sur l'un au moins des moyens de validation 4, la distance AB est affichée sur un afficheur 5 situé sur le boîtier 1. Ce calcul de distance AB est réalisé grâce aux valeurs a, AC et BC, au moyen d'un algorithme de trigonométrie classique mise en œuvre sein d'un microprocesseur situé sur une carte électronique dédiée (non représentée).

Sur la figure 11, il est illustré un opérateur 9 effectuant une mesure entre deux points A et B du plafond 8. On voit bien ici les avantages de l'invention, à savoir la rapidité de la prise de mesure grâce aux deux pointages effectués simultanément tout en ne nécessitant pas de monter sur un escabeau. Ce qui limite également les risques de chute de l'opérateur au cas où l'escabeau serait mal positionné ou bien encore que l'opérateur perde l'équilibre.

Selon un mode de réalisation particulier de l'invention, l'afficheur 5 est placé dans une zone médiane du boîtier 1 et le moyen d'ajustement 6, par exemple de type molette, est placée au niveau d'une zone supérieure du boîtier. L'afficheur 5 permet d'afficher la valeur AB à déterminer.

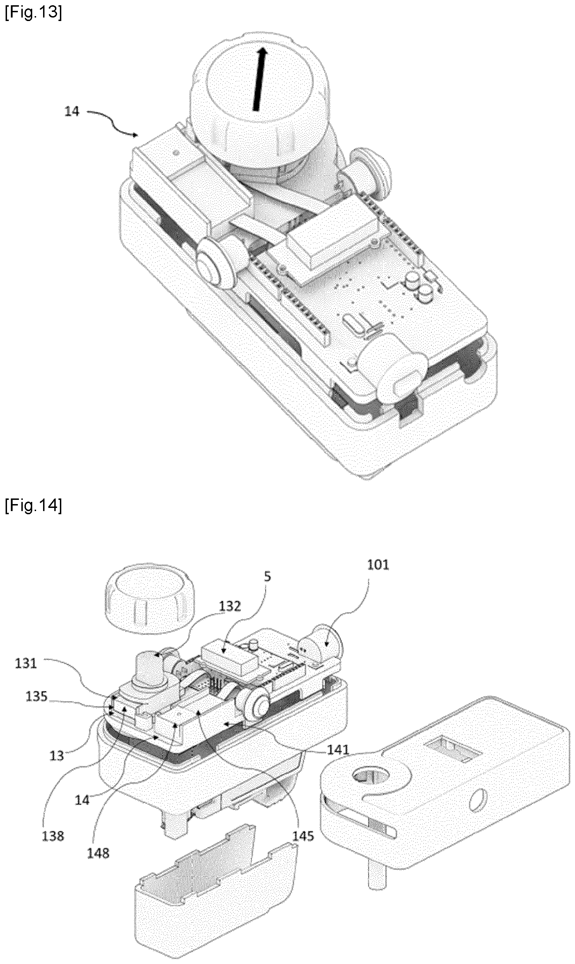

La figure 14 illustre une vue en éclaté des différents éléments composants le boîtier 1, et plus particulièrement les premier et second moyens de pointage 13 et 14, le moyen d'ajustement 6 de l'angle α entre les premier et second moyens de pointage.

Par exemple, mais non exclusivement, le moyen d'ajustement 6 consiste en une molette amovible venant se fixer sur le moyen de pointage mobile (ici le premier moyen de pointage 13).

Ce premier moyen de pointage 13 est composé d'un corps 131 permettant d'accueillir un dispositif de pointage 138 de type laser, par exemple une diode laser.

Ce corps 131 comprends en outre un moyen de fixation 132 en forme de tige, le moyen de fixation 132 étant solidaire et sensiblement perpendiculaire au corps 131.

De manière similaire, le second moyen de pointage 14 comprends un corps 141

Avantageusement, le moyen de fixation 132 comprend une partie de détrompage 133, par exemple un méplat, adapté à se conformer à un logement (non représenté) du moyen d'ajustement 6 lorsque ce dernier est positionné sur le moyen de fixation 132.

Bien entendu, l'homme du métier peut adapter tout autre variante possible afin d'assurer cette fonction de détrompage.

Également un bouton de mise en marche 101 permet la mise sous tension du dispositif, l'alimentation étant gérée par un module dédié (non décrit ici) relié à une batterie (non illustrée).

Chaque corps 131 et 141 comprend un logement, respectivement un premier logement 135 et un second logement 145 permettant d'insérer respectivement un premier et un second dispositif de pointage (148, 138) de type laser.

Chaque premier et second dispositif de pointage (148, 138) est relié à un circuit électronique de traitement de l'information (non détaillé ici) via des nappes électroniques, respectivement 136 et 146.

Le capteur d'angle (non représenté) est relié mécaniquement, par exemple, par emmanchement à force dans un logement dédié du premier moyen de pointage 13 et coaxial à un axe passant par le milieu du moyen de fixation 132. Ainsi, le capteur d'angle est indirectement relié mécaniquement également au moyen d'ajustement 6, permettant ainsi de remonter une information d'angle. L'homme du métier appréciera que plusieurs variantes des modes de réalisation précités soient envisageables sans sortir du cadre de l'invention.

## Revendications

1. Dispositif de détermination d'une distance (AB) entre un premier point (A) et un second point (B) **caractérisé en ce qu'**il comprend :
- un boîtier (1) muni d'un premier moyen de pointage (11; 13) du premier point (A) et d'un second moyen de pointage (12; 14) du second point (B), les premier et second moyens de pointage étant agencés sensiblement en un point (C) au sein dudit boîtier ;
- un premier moyen de détermination d'une première distance (AC) entre le premier point (A) et le point (C) ;
- un second moyen de détermination d'une seconde distance (BC) entre le second point (B) et le point (C) ;
- un moyen d'ajustement (6) d'un angle (a) permettant d'ajuster l'angle formé entre les première et seconde distances afin de pointer en même temps les premier et second points au moyen respectivement des premier et second moyens de pointage ;
- un moyen de détermination (15) dudit angle (a) ;
le premier moyen de pointage (11; 13) du premier point (A) étant mobile par rapport au second moyen de pointage (12; 14) du second point (B) lors de l'ajustement de l'angle (a) par le moyen d'ajustement (6).

2. Dispositif selon la revendication 1, **caractérisé en ce que** les premier et second moyens de pointage comprennent respectivement un premier et second dispositif de pointage (118, 128 ; 148, 138) de type laser.

3. Dispositif selon l'une quelconque des revendications 1 à 2, **caractérisé en ce que** les moyens de détermination des première et seconde distances sont de type télémétrie laser.

4. Dispositif selon l'une quelconque des revendications 1 à 3 **caractérisé en ce que** le moyen de détermination (15) de l'angle (a) formé entre les premier et second moyens de pointage est un capteur d'angle.

5. Dispositif selon l'une quelconque des revendications 1 à 3 **caractérisé en ce que** le moyen de détermination (15) de l'angle formé entre les premier et second moyens de pointage est un capteur gyroscopique.

6. Dispositif selon l'une quelconque des revendications 1 à 5 **caractérisé en ce que** le moyen d'ajustement (6) est solidaire d'un corps (121) du second moyen de pointage (12), une rotation dans un premier sens dudit moyen d'ajustement (6) entrainant une rotation du second moyen de pointage (12) dans le même sens ainsi qu'une rotation du premier moyen de pointage (11) dans un second sens, opposé audit premier sens.

7. Dispositif selon la revendication 6 **caractérisé en ce que** chaque premier et second moyen de pointage (11, 12) comprend respectivement une première et une seconde roue crantée (114, 124), chaque roue crantée disposant d'un pas identique entre elles et adaptées à se conformer entre elles, la rotation du premier moyen de pointage (11) par ledit second moyen de pointage (12) étant réalisé au moyen desdites première et seconde roues crantées (114, 124) lorsque le moyen d'ajustement (6) est mis en rotation.

8. Dispositif selon l'une quelconque des revendications 1 à 7 **caractérisé en ce que** le capteur d'angle (15) est solidaire du second moyen de pointage (12) et adapté à retourner une valeur d'angle de rotation dudit second moyen de pointage (12) lorsque le moyen d'ajustement (6) est mis en rotation.

9. Dispositif selon l'une quelconques des revendications 1 à 5 **caractérisé en ce que** le second moyen de pointage (14) est fixe par rapport au boitier (1).

10. Dispositif selon la revendication 9 **caractérisé en ce que** le moyen d'ajustement (6) est solidaire d'un corps (131) du premier moyen de pointage (13), une rotation du moyen d'ajustement (6) dans un sens entrainant une rotation du premier moyen de pointage (13) dans le même sens.

11. Dispositif selon l'une quelconque des revendications 9 à 10 **caractérisé en ce que** le moyen d'ajustement (6) comprend un moyen d'indication (61) d'une orientation du premier moyen de pointage (13), et **en ce que** le boîter (1) comprend un moyen d'indication (100) d'une orientation fixe du second moyen de pointage (14).

12. Dispositif selon l'une quelconque des revendications 1 à 11 **caractérisé en ce qu'**il comprend au moins un moyen de validation (4) permettant d'enregistrer la distance (AB) dans un moyen d'enregistrement et/ou de l'afficher sur un afficheur (5).

13. Un procédé pour déterminer une distance (AB) entre un premier point (A) et un second point (B), **caractérisé en ce qu'**il comprend :
- fournir des premiers et deuxièmes moyens de pointage agencés tous deux sensiblement en un point (C) ;
- pointer le premier moyen de pointage (11; 13) vers le premier point (A) ;
- pointer le second moyen de pointage (12; 14) vers le second point (B) ;
- ajuster un angle (a) formé entre les premiers et seconds moyens de pointage afin de pointer en même temps les premiers et seconds moyens de pointage vers les premier et second points respectivement ;
- déterminer une première distance (AC) entre le premier point (A) et le point (C) ;
- déterminer une seconde distance (BC) entre le second point (B) et le point (C) ;
- déterminer ledit angle (a) ; et
- calculer à l'aide d'un algorithme trigonométrique la distance (AB) entre le premier point (A) et le second point (B) en utilisant la première distance (AC), la seconde distance (BC) et l'angle (a).

14. Procédé selon la revendication 13 **caractérisé en ce qu'**il comprend enregistrer la distance (AB) dans un moyen d'enregistrement et/ou l'afficher sur un afficheur (5).

15. Dispositif selon l'une quelconque des revendications 1 à 12 **caractérisé en ce qu'**il comprend un microprocesseur et un moyen d'enregistrement sur lequel est enregistré un programme informatique comprenant un code de programme lisible par ordinateur pour amener un processeur à exécuter une procédure pour mettre en œuvre le procédé selon l'une quelconque des revendications 13 à 14.
